# EUROPEAN PATENT APPLICATION

(11) **EP 4 814 053 A1**
(43) Date of publication of application: **30.09.2026**
(21) Application number: 24911372.1
(22) Date of filing: 26.12.2024
(51) Int. Cl.: C08L 23/08, B29D 23/00, F16L 11/04

(54) **EASY-TO-PEEL PIPE, AND PREPARATION METHOD THEREFOR**

(30) Priority: 29.12.2023 CN 202311839344; 29.12.2023 CN 202311850054
(71) Applicant: Shenzhen Woer Heat-shrinkable Material Co., Ltd., Shenzhen, Guangdong 518118 (CN)
(72) Inventor: HUANG, Zhaozheng, Shenzhen, Guangdong 518118 (CN)
(74) Representative: Von Rohr Patentanwälte Partnerschaft mbB
(86) International application number: PCT/CN2024/142893
(87) International publication number: WO 2025/140451

(57) **Abstract**

An easy-to-peel pipe and a preparation method therefor. The pipe uses an ethylene-acrylate copolymer as a matrix resin. Since ethylene-acrylate is a copolymer and contains an acrylate side group, the crystallization thereof is disorganized, the distance between main chain vinyl molecules is increased, and the structure of molecular entanglement is reduced, thereby reducing the cohesive strength of an ethylene-acrylate molecular chain. The orientation degree of the molecular chain inside the ethylene-acrylate copolymer is further controlled by means of an extrusion process, ensuring that the orientation degree is in the range of 23-95%, such that the molecular chain and the chain segment of the ethylene-acrylate copolymer stretch in the orientation direction from the disordered state of free curling, thereby further reducing the structure of molecular entanglement and achieving the tearability of the pipe.

## Description

### CROSS-REFERENCE TO THE RELATED APPLICATIONS

The present invention claims priority to Chinese Invention Patent Application No. 2023118500542, filed on December 29, 2023, entitled "EASY-TO-PEEL PIPE, AND PREPARATION METHOD THEREFOR", the content of which is incorporated herein by reference.

The present invention claims priority to Chinese Invention Patent Application No. 2023118393447, filed on December 29, 2023, entitled "EASY-TO-PEEL PIPE", the content of which is incorporated herein by reference.

### TECHNICAL FIELD

The present invention relates to the technical field of pipes, and in particular, to an easy-to-peel pipe and a preparation method therefor.

### BACKGROUND

An easy-to-peel pipe can be used as a protective pipe for precision instruments, electronic components, etc.; a liquid guiding hose; a medical device introduction pipe for introducing a guide wire, etc. into a body; and an assembly fixture for liquid guiding hoses, etc., and when not needed, the pipe is removed by peeling.

At present, easy-to-peel pipe materials on the market are mainly PTFE, and products thereof are expensive, and are mainly manufactured and produced abroad, with difficult production processes and high technical barriers. With the rapid development of medical technology, the demand for easy-to-peel pipes is increasing, and the long procurement cycle from abroad has greatly affected the development of domestic medical technology. The applicant has independently developed an easy-to-peel pipe made from polyolefin and copolymer resin thereof, which has a tear strength lower than that of a PTFE easy-to-peel pipe, and does not adhere to internal materials, and can completely replace a PTFE easy-to-peel pipe, providing a new option for easy-to-peel pipes.

### SUMMARY

A main object of the present invention is to provide an easy-to-peel pipe made from polyolefin and copolymer resin thereof, which has a tear strength lower than that of a PTFE tearable pipe, and does not adhere to internal materials.

In a first aspect, embodiments of the present invention provide an easy-to-peel pipe having linear tearability in a length direction of the pipe, wherein a preparation material of the easy-to-peel pipe comprises an ethylene-acrylate copolymer as a matrix resin, and an extrusion process controls an orientation degree of molecular chains of an extruded pipe to be 23%-95%.

In some embodiments of the present invention, the orientation degree of the molecular chains of the extruded pipe is 30%-90%.

In some embodiments of the present invention, the ethylene-acrylate copolymer comprises at least one of an ethylene-methyl acrylate copolymer (EMA), an ethylene-ethyl acrylate copolymer (EEA), an ethylene-butyl acrylate copolymer (EBA), and an ethylene-methyl methacrylate copolymer (EMMA).

In some embodiments of the present invention, the ethylene-acrylate copolymer has a melt index of (0.5-10) g/10min, and an acrylic acid content of 9wt%-30wt%.

In some embodiments of the present invention, the ethylene-acrylate copolymer has a tear strength of less than 75 kN/m.

In some embodiments of the present invention, the ethylene-acrylate copolymer has a tensile strength of 15-24 MPa.

In some embodiments of the present invention, calculated by weight parts, the preparation material of the easy-to-peel pipe comprises the following components:
ethylene-acrylate copolymer: 20-90 parts; and
reinforcing agent: 10-80 parts.

In some embodiments of the present invention, the reinforcing agent comprises at least one of polyethylene, polyolefin elastomer, and ethylene-vinyl acetate copolymer.

In some embodiments of the present invention, the polyethylene (PE) is low-density polyethylene (LDPE), and the low-density polyethylene (LDPE) has a melt index of (0.3-7) g/10min, and a tensile strength of 17-30 MPa.

In some embodiments of the present invention, the polyethylene (PE) is linear low-density polyethylene (LLDPE), and the linear low-density polyethylene (LLDPE) has a melt index of (0.3-10) g/10min, and a tensile strength of 20-35 MPa.

In some embodiments of the present invention, the polyethylene (PE) is medium-density polyethylene (MDPE), and the medium-density polyethylene (MDPE) has a melt index of (0.3-10) g/10min, and a tensile strength of 25-35 MPa.

In some embodiments of the present invention, the polyethylene (PE) is high-density polyethylene (HDPE), and the high-density polyethylene (HDPE) has a melt index of (0.3-10) g/10min, and a tensile strength of 28-40 MPa.

In some embodiments of the present invention, the polyolefin elastomer (POE) has a melt index of (0.5-5) g/10min, a tensile strength of 18-40 MPa, and a melting temperature of 70-110 °C.

In some embodiments of the present invention, the ethylene-vinyl acetate copolymer (EVA) has a melt index of (0.5-7) g/10min, a tensile strength of 16-25 MPa, and a vinyl acetate (VA) content of not more than 20%.

In some embodiments of the present invention, calculated by weight parts, the preparation material of the easy-to-peel pipe further comprises at least one of the following additives:
antioxidant: 0.05-0.3 parts; and
lubricant: 0.05-0.1 parts,
wherein the antioxidant includes, but is not limited to, an asymmetric hindered phenolic antioxidant, an aromatic amine antioxidant, a thioether antioxidant, and a phosphite antioxidant; and
the lubricant includes, but is not limited to, PTFE powder, zinc stearate, magnesium stearate, silicone, calcium stearate, or ethylene bis-stearamide.

In some embodiments of the present invention, a ratio representing the tear linearity is in a range of 50%:50% to 48%:52%.

In some embodiments of the present invention, the easy-to-peel pipe has an inner diameter of 0.3-16 mm.

In some embodiments of the present invention, the easy-to-peel pipe has a wall thickness of 0.1-2 mm.

In a second aspect, embodiments of the present invention provide an easy-to-peel pipe having linear tearability in a length direction of the pipe, wherein a preparation material of the easy-to-peel pipe comprises an ethylene-acrylate copolymer as a matrix resin, and the easy-to-peel pipe has a molecular chain orientation degree of 23%-95%.

In some embodiments of the present invention, the easy-to-peel pipe has a molecular chain orientation degree of 30%-95%.

In some embodiments of the present invention, the easy-to-peel pipe has a molecular chain orientation degree of 30%-90%.

In some embodiments of the present invention, the easy-to-peel pipe has a molecular chain orientation degree of 35%-90%.

In a third aspect, embodiments of the present invention provide a preparation method of an easy-to-peel pipe, comprising the following steps:
masterbatch processing: mixing raw materials uniformly, extruding by an extrusion device, drawing, and pelletizing a resultant to obtain masterbatch granules, wherein the raw materials comprise an ethylene-acrylate copolymer; and
extrusion into pipe: extruding the above-obtained masterbatch granules into a pipe by an extruder to obtain the easy-to-peel pipe, wherein an orientation degree of molecular chains of the extruded pipe is controlled to be 23%-95%.

In some embodiments of the present invention, in the masterbatch processing step, the raw materials further comprise at least one of a reinforcing agent, an antioxidant, and a lubricant.

In some embodiments of the present invention, in the masterbatch processing step, the mixing duration is 3-5 min.

In some embodiments of the present invention, in the masterbatch processing step, the extrusion temperature of the extrusion device is 130-200 °C.

In some embodiments of the present invention, in the extrusion into pipe step, the orientation degree of the molecular chains of the extruded pipe is 30%-90%.

In some embodiments of the present invention, the ethylene-acrylate copolymer comprises at least one of an ethylene-methyl acrylate copolymer (EMA), an ethylene-ethyl acrylate copolymer (EEA), an ethylene-butyl acrylate copolymer (EBA), and an ethylene-methyl methacrylate copolymer (EMMA).

In some embodiments of the present invention, the ethylene-acrylate copolymer has a melt index of (0.5-10) g/10min, and an acrylic acid content of 9 wt%-30 wt%.

In some embodiments of the present invention, the ethylene-acrylate copolymer has a tear strength of less than 75 kN/m.

In some embodiments of the present invention, the ethylene-acrylate copolymer has a tensile strength of 15-24 MPa.

In some embodiments of the present invention, calculated by weight parts, the preparation material of the easy-to-peel pipe comprises the following components:
ethylene-acrylate copolymer: 20-90 parts; and
reinforcing agent: 10-80 parts.

In some embodiments of the present invention, the reinforcing agent comprises at least one of polyethylene, polyolefin elastomer, and ethylene-vinyl acetate copolymer.

In some embodiments of the present invention, the polyethylene (PE) is low-density polyethylene (LDPE), and the low-density polyethylene (LDPE) has a melt index of (0.3-7) g/10min, and a tensile strength of 17-30 MPa.

In some embodiments of the present invention, the polyethylene (PE) is linear low-density polyethylene (LLDPE), and the linear low-density polyethylene (LLDPE) has a melt index of (0.3-10) g/10min, and a tensile strength of 20-35 MPa.

In some embodiments of the present invention, the polyethylene (PE) is medium-density polyethylene (MDPE), and the medium-density polyethylene (MDPE) has a melt index of (0.3-10) g/10min, and a tensile strength of 25-35 MPa.

In some embodiments of the present invention, the polyethylene (PE) is high-density polyethylene (HDPE), and the high-density polyethylene (HDPE) has a melt index of (0.3-10) g/10min, and a tensile strength of 28-40 MPa.

In some embodiments of the present invention, the polyolefin elastomer (POE) has a melt index of (0.5-5) g/10min, a tensile strength of 18-40 MPa, and a melting temperature of 70-110 °C.

In some embodiments of the present invention, the ethylene-vinyl acetate copolymer (EVA) has a melt index of (0.5-7) g/10min, a tensile strength of 16-25 MPa, and a vinyl acetate (VA) content of not more than 20%.

In some embodiments of the present invention, calculated by weight parts, the preparation material of the easy-to-peel pipe further comprises at least one of the following additives:
antioxidant: 0.05-0.3 parts; and
lubricant: 0.05-0.1 parts,
wherein the antioxidant comprises at least one of an asymmetric hindered phenolic antioxidant, an aromatic amine antioxidant, a thioether antioxidant, and a phosphite antioxidant; and
the lubricant comprises at least one of PTFE powder, zinc stearate, magnesium stearate, silicone, calcium stearate, and ethylene bis-stearamide.

Beneficial effects achievable by the present invention:
the easy-to-peel pipe provided by the present invention uses an ethylene-acrylate copolymer as a matrix resin, and since ethylene-acrylate is a copolymer and contains an acrylate side group, the crystallization thereof is disorganized, the distance between main chain vinyl molecules is increased, and the structure of molecular entanglement is reduced, thereby reducing the cohesive strength of an ethylene-acrylate molecular chain; and the orientation degree of the molecular chains inside the ethylene-acrylate copolymer is further controlled by means of an extrusion process, ensuring that the orientation degree is in the range of 23%-95%, such that the molecular chain and the chain segment of the ethylene-acrylate copolymer stretch in the orientation direction from the disordered state of free curling, thereby further reducing the structure of molecular entanglement and achieving the tearability of the pipe.

### DETAILED DESCRIPTION OF THE EMBODIMENTS

It should be understood that the specific embodiments described herein are merely used to explain the present invention, and are not intended to limit the present invention.

Hereinafter, the technical solutions in the embodiments of the present invention will be clearly and completely described with reference to the drawings in the embodiments of the present invention. Obviously, the described embodiments are merely a part of the embodiments of the present invention, rather than all the embodiments. Based on the embodiments in the present invention, all other embodiments obtained by those of ordinary skill in the art without making creative efforts shall fall within the protection scope of the present invention.

In the present invention, descriptions relating to "first", "second", etc. are merely used for descriptive purposes, and cannot be understood as indicating or implying relative importance or implicitly specifying the number of indicated technical features. Thus, features defined as "first", "second" may explicitly or implicitly include at least one of the features. In addition, the technical solutions between the various embodiments can be combined with each other, but must be based on what those of ordinary skill in the art can achieve, and when the combination of the technical solutions results in a contradiction or cannot be implemented, it should be considered that such a combination of technical solutions does not exist, and is not within the protection scope required by the present invention.

A polymer orientation structure refers to a structure in which, under the action of an external force, molecular chains or other structural units are preferentially arranged along the acting direction of the external force and are solidified. The ethylene-acrylate copolymer subjected to melt extrusion undergoes an extrusion stretching treatment process, and the molecular chains of the ethylene-acrylate copolymer are arranged along a stretching direction, that is, preferentially oriented along the stretching direction.

The ethylene-acrylate copolymer is formed by copolymerization of ethylene and acrylate, and mainly includes an ethylene-methyl acrylate copolymer (EMA), an ethylene-ethyl acrylate copolymer (EEA), an ethylene-butyl acrylate copolymer (EBA), and an ethylene-methyl methacrylate copolymer (EMMA). The properties of the ethylene-acrylate copolymer are related to the content of the acrylate monomer, the average molecular weight, the molecular weight distribution, and long and short branches.

A polymer material exists in a state in which molecular chains of the molecules constituting the polymer material are entangled in a state of ball of yarn. In a molded body formed by using the polymer material, the entanglement state of molecules is also maintained, and the physical properties of the molded body significantly affect the molecular entanglement structure. In the research process of a peelable pipe, it is unexpectedly discovered that using an ethylene-acrylate copolymer as a matrix resin, and ensuring that the orientation degree of the molecular chains of the extruded pipe in an extrusion process is in a range of 23%-95%, an easy-to-peel pipe having linear tearability in a length direction of the pipe can be prepared. The orientation degree of the extruded pipe in the extrusion process refers to the orientation degree of the product easy-to-peel pipe. This may be due to the particularity of the structure of the ethylene-acrylate copolymer, which contains methyl acrylate, ethyl acrylate, butyl acrylate, and methyl methacrylate side groups, affecting the crystallization and entanglement of the molecules, increasing the distance between main chain molecules, and reducing the molecular entanglement structure, such that the cohesive strength of the molecular chains of the ethylene-acrylate copolymer decreases. The orientation degree of the molecular chains inside the ethylene-acrylate copolymer is further controlled by means of an extrusion process, ensuring that the orientation degree is in a range of 23%-95%, such that the molecular chain and the chain segment of the ethylene-acrylate copolymer stretch in the orientation direction from the disordered state of free curling, thereby further reducing the molecular entanglement structure and achieving the tearability of the pipe. The ordered state change of the orientation significantly increases the strength of the copolymer along the length direction of the pipe, while the strength in a direction perpendicular to the pipe decreases, which further improves the strength and tearability of the pipe.

In the extrusion process, the draw ratio is ensured by adjusting a difference between the extrusion speed at which a tube blank is extruded from a die and the traction speed at which a traction machine pulls the pipe, and by controlling the draw ratio of the extruded pipe to be between 5 and 60, preferably controlling the draw ratio of the extruded pipe to be between 7 and 30, an extruded pipe having a molecular chain orientation degree of 23%-95% is obtained.

When the content of acrylate monomers in the ethylene-acrylate copolymer increases, the orderliness of the molecular chain is further reduced, and the content of acrylic side groups is also increased, thereby resulting in a decrease in crystallinity and melting point, and the tearability becomes better, but when the content of acrylate monomers is too high, the cohesive strength will be too low, and problems such as the overall strength of the pipe becoming low will occur, affecting the molding and use of the pipe. Therefore, an acrylic acid content of 9 wt%-30 wt% is preferred.

A melt index (MI) is an indicator indicating the flowability of a resin. The melt index is the mass in grams of a resin melt passing through a standard capillary in 10 minutes at a certain temperature and pressure, and the unit thereof is g/10min. A high melt index means a small average molecular weight of the resin, low viscosity, good flowability, easy processing and molding, but poor mechanical properties; a low melt index means a large average molecular weight of the resin, high viscosity, relatively poor flowability, and somewhat difficult molding and processing, but good mechanical properties. In some embodiments, the ethylene-acrylate copolymer has a melt index (MI) of (0.5-6) g/10min, and a melt index in this range can satisfy good flowability and good mechanical properties.

In some embodiments, the ethylene-acrylate copolymer has a tear strength of less than 75 kN/m, and a tear strength in this range facilitates better removal of the pipe.

In some embodiments, the ethylene-acrylate copolymer has a tensile strength of 15-24 MPa, and a tensile strength in this range can increase the tensile strength of the pipe.

In order to further increase the tensile strength of the easy-to-peel pipe, polymers such as polyethylene (PE), polyolefin elastomer (POE), and ethylene-vinyl acetate copolymer (EVA) can be added as reinforcing agents. Polyethylene is a thermoplastic plastic obtained by polymerization of ethylene. Due to the different densities of resins obtained by different polymerization methods, polyethylene is divided into high-density polyethylene (HDPE), medium-density polyethylene (MDPE), linear low-density polyethylene (LLDPE), and low-density polyethylene (LDPE). The polyolefin elastomer (POE) can be one of random copolymer elastomers, such as ethylene with 1-butene, ethylene with 1-hexene, and ethylene with 1-octene; when an ethylene-vinyl acetate copolymer (EVA) is selected, a vinyl acetate (VA) content of less than 20% provides a better reinforcing effect. In some embodiments, calculated by weight parts, the preparation material of the easy-to-peel pipe comprises the following components:
ethylene-acrylate copolymer: 20-90 parts; and
reinforcing agent: 10-80 parts.

The addition of the reinforcing agent can increase the tensile strength of the molecular structure, and the orientation degree of the molecular chain inside the blend of ethylene-acrylate copolymer and reinforcing agent is further controlled by means of an extrusion process, ensuring that the orientation degree is in a range of 23%-95%, such that the molecular chain and the chain segment of the blend of ethylene-acrylate copolymer and reinforcing agent stretch in the orientation direction from the disordered state of free curling, reducing the linear entanglement structure of the blend molecules. The reinforcing agent has a characteristic of high crystallinity or long branches; and a reinforcing agent with high crystallinity, such as PE or EVA, causes the crystallization of the reinforcing agent to change from spherulites to monoclinic crystals during pipe orientation by extrusion stretching. The formation of monoclinic crystals can not only increase the tensile strength in the orientation direction, but also increase the number of physical crosslinking points formed by the blend molecular chain and chain segment in the orientation direction (that is, along the length direction of the pipe), thereby significantly increasing the tensile strength of the pipe in the orientation direction. A reinforcing agent containing long branches, such as POE or LDPE, can form certain physical crosslinking points with the crystalline region of the ethylene-acrylate copolymer, and during orientation by extrusion stretching, the ethylene-acrylate copolymer changes from spherulites to monoclinic crystals by stretching orientation, and forms physical crosslinking points with the oriented long branch molecules, increasing the strength in the orientation direction, while the physical crosslinking points in a direction perpendicular to the orientation direction are significantly reduced, resulting in a decrease in the strength in a direction perpendicular to the orientation direction. By adding an appropriate proportion of reinforcing agent and controlling the orientation degree in the extrusion stretching process, such that the reinforcing agent exhibits fiber-like reinforcing units along the orientation direction when the ethylene-acrylate copolymer is oriented, thereby further improving the tearability of the pipe. Therefore, the addition of the reinforcing agent can not only increase the tensile strength of the pipe in the orientation direction, but also further improve the tearability thereof along the length direction of the pipe.

In some embodiments, the polyethylene (PE) is low-density polyethylene (LDPE), and the low-density polyethylene (LDPE) has a melt index of (0.3-7) g/10min, and a tensile strength of 17-30 MPa.

In some embodiments, the polyethylene (PE) is linear low-density polyethylene (LLDPE), and the linear low-density polyethylene (LLDPE) has a melt index of (0.3-10) g/10min, and a tensile strength of 20-35 MPa.

In some embodiments, the polyethylene (PE) is medium-density polyethylene (MDPE), and the medium-density polyethylene (MDPE) has a melt index of (0.3-10) g/10min, and a tensile strength of 25-35 MPa.

In some embodiments, the polyethylene (PE) is high-density polyethylene (HDPE), and the high-density polyethylene (HDPE) has a melt index of (0.3-10) g/10min, and a tensile strength of 28-40 MPa.

In some embodiments, the polyolefin elastomer (POE) has a melt index of (0.5-5) g/10min, a tensile strength of 18-40 MPa, and a melting temperature of 70-110 °C.

In some embodiments, the ethylene-vinyl acetate copolymer (EVA) has a melt index of (0.5-7) g/10min, a tensile strength of 16-25 MPa, and a vinyl acetate (VA) content of not more than 20%.

Of course, in order to obtain a pipe with better performance, additives such as antioxidants and lubricants can also be added. In some embodiments, the preparation material of the easy-to-peel pipe further comprises at least one of the following additives: antioxidant: 0.05-0.3 parts; and lubricant: 0.05-0.1 parts.

Antioxidants are beneficial for improving the antioxidant performance and aging resistance of the easy-to-peel pipe, and prolonging the service life of the easy-to-peel pipe, and the antioxidant comprises at least one of an asymmetric hindered phenolic antioxidant, an aromatic amine antioxidant, a thioether antioxidant, and a phosphite antioxidant.

Among them, the hindered phenolic antioxidants include, but are not limited to, antioxidant 1010 (tetrakis[β-(3,5-di-tert-butyl-4-hydroxyphenyl) propionic acid] pentaerythritol ester), BHT (2,6-di-tert-butyl-p-cresol), and antioxidant 1076 (β-(3,5-di-tert-butyl-4-hydroxyphenyl) propionic acid n-octadecanol ester).

Among them, aromatic amine antioxidants include, but are not limited to, diphenylamine, p-phenylenediamine, and dihydroquinoline and derivatives or polymers thereof, such as antioxidant 445 (4,4'-bis(α,α-dimethylbenzyl) diphenylamine).

Among them, thioether antioxidants include, but are not limited to, DLTP (dilauryl thiodipropionate), DSTDP (distearyl thiodipropionate), and DSTP (octadecyl thiodipropionate).

Among them, phosphite antioxidants include, but are not limited to, antioxidant 168 (tris[2,4-di-tert-butylphenyl] phosphite), antioxidant 618 (distearyl pentaerythritol diphosphite), and antioxidant 626 (bis[2,4-di-tert-butylphenyl] pentaerythritol diphosphite).

Lubricants are beneficial for promoting more uniform mixing between various raw materials, and include, but are not limited to, PTFE powder, zinc stearate, magnesium stearate, silicone, calcium stearate, or ethylene bis-stearamide.

In some embodiments, calculated by weight parts, the preparation material of the easy-to-peel pipe comprises the following components:
ethylene-acrylate copolymer: 20-90 parts, and reinforcing agent: 10-80 parts. For example, the ethylene-acrylate copolymer can be any one of 20 parts, 30 parts, 40 parts, 50 parts, 60 parts, 70 parts, 80 parts, 90 parts, etc. in a range of 20-90 parts; and the reinforcing agent can be any one of 10 parts, 20 parts, 30 parts, 40 parts, 50 parts, 60 parts, 70 parts, 80 parts, etc. in a range of 10-80 parts.

Under the limitation of the above weight parts, it is beneficial for promoting mixing between various raw materials, satisfying linear tearability performance and achieving a certain tensile strength.

In some embodiments, a ratio representing the tear linearity is in a range of 50%:50% to 48%:52%.

In some embodiments, the easy-to-peel pipe has an inner diameter of 0.3-16 mm.

In some embodiments, the easy-to-peel pipe has a wall thickness of 0.1-2 mm.

The present invention further provides a preparation method of an easy-to-peel pipe, comprising the following steps:
masterbatch processing: mixing raw materials uniformly, extruding by an extrusion device, drawing, and pelletizing a resultant to obtain masterbatch granules, wherein the raw materials comprise an ethylene-acrylate copolymer; and
extrusion into pipe: extruding the above-obtained masterbatch granules into a pipe by an extruder to obtain the easy-to-peel pipe, wherein an orientation degree of molecular chains of the extruded pipe is controlled to be 23%-95%.

In some embodiments, in the masterbatch processing step, the raw materials further comprise at least one of a reinforcing agent, an antioxidant, and a lubricant.

In some embodiments, in the masterbatch processing step, the mixing duration is 3-5 min.

In some embodiments, in the masterbatch processing step, the extrusion temperature of the extrusion device is 130-200 °C.

In some embodiments, in the extrusion into pipe step, the orientation degree of the molecular chains of the extruded pipe is 30%-90%.

Hereinafter, the technical solutions of the present invention will be further described in detail with reference to specific embodiments. It should be understood that the following specific embodiments are merely used to explain the present invention, and are not intended to limit the present invention.

### Determination of Draw Ratio

A single-screw extruder is used, and the extrusion die specifications are as follows: the die is D₁ (mm), and the core rod is D₂ (mm), and the extruded pipe dimensions are as follows: extruded inner diameter of d₁ (mm), and wall thickness of w (mm) (depending on the dimensions of the extruded pipe, a corresponding extruder, die, and core rod must be selected). During the extrusion process, by controlling the traction speed and the extrusion speed, extruded pipes having different draw ratios are obtained, and the draw ratio is calculated as follows: $Draw ratio = \frac{D {1}^{2} - D {2}^{2}}{4 \left({d}_{1}w+{w}^{2}\right)} .$

### Determination of Orientation Degree

Testing is performed by means of synchrotron wide-angle X-ray diffraction (Synchrotron WAXD) (Shanghai Synchrotron Radiation Facility SSRF), with beamline station of BL14B1, electron beam energy of 10 keV, and fixed distance between sample and detector of 280 mm. Two-dimensional images are acquired using a MarCCD detector, the exposure duration is 120 s, and the oriented amorphous-region fraction (A2) and the oriented crystalline-region fraction (A3) are obtained. The orientation degree X of the product is the sum of the oriented crystalline-region fraction and the oriented amorphous-region fraction (that is, X=A2+A3). The specific calculation formula is as follows: $A 2 = \frac{{\sum }_{A 2} 2 π \int sinΦdΦ \int I \left(S\right) {S}^{2} dS}{{\sum }_{total} 2 π \int sinΦdΦ \int I \left(S\right) {S}^{2} dS}$ $A 3 = \frac{{\sum }_{A 3} 2 π \int sinΦdΦ \int I \left(S\right) {S}^{2} dS}{{\sum }_{total} 2 π \int sinΦdΦ \int I \left(S\right) {S}^{2} dS}$
wherein I(S) represents the intensity distribution of the diffraction peak, which can be read from the figure; S is the reciprocal vector in reciprocal space (S=2sinθ/λ), and the unit thereof is nm⁻¹; λ is the wavelength, and 2θ is the scattering angle; and Φ is the angle between the scattering vector and the stretching direction (that is, the azimuthal angle).

### Test for Tear Linearity

In order to more clearly determine the tear linearity, the determination is performed by the following method. A cut having a length of 40 mm is provided at an end portion on one side of a sample having a length of 300 mm. The cut is provided parallel to the length direction of the pipe at the center of the pipe by using a jig. The pipe is torn from the cut portion to the other end portion of the pipe at a speed of 200 mm/min. The weights of the two torn pipes are measured respectively, and a weight ratio is obtained. It can be determined that the closer the ratio is to 50%:50%, the higher the tear linearity.

### Tear Strength Test

After a 40 mm cut is formed by cutting with a knife, a sample of 200 mm is taken, and tearing is performed by means of a tensile testing machine at a speed of 200 mm/min, and the maximum force at that time is measured as the tear strength. Three measurements are performed on samples of the same composition, and a weighted average value thereof is calculated.

### Tensile Strength Test

Testing is performed with reference to the method of UL 224-2021, 5.4.

### Example 1-1

### Masterbatch Processing

An ethylene-methyl acrylate copolymer (EMA, DuPont ELVALOY^{TM} AC 1218) and antioxidant (antioxidant 1010) (mass ratio=60/0.1) were added to a high-speed mixer and stirred for 3-5 minutes. The material obtained from the above process was fed into a twin-screw extruder having a diameter of 30 mm, and extruded at a screw speed of 45 rpm and a temperature of 130-200 °C (the temperature range included 10 zones: zone 1 was 130 °C, zone 2 was 160 °C, zone 3 was 180 °C, zone 4 was 185 °C, zone 5 was 190 °C, zone 6 was 190 °C, zone 7 was 195 °C, zone 8 was 195 °C, zone 9 was 195 °C, zone 10 was 195 °C, and the head temperature was set to 200 °C), drawn, water-cooled, and pelletized to finally form masterbatch granules.

### Extrusion into Pipe

The above-obtained masterbatch granules were subjected to tube molding by means of a single-screw extruder. A full-flight screw was used, at an extrusion temperature of 130-190 °C (the extrusion temperatures were respectively as follows: zone 1: 130 °C, zone 2: 180 °C, zone 3: 190 °C, flange zone: 190 °C, head zone: 190 °C, and die zone: 190 °C), the draw ratio was controlled to be 9.7, extrusion molding was performed, and the orientation degree of the molecular chains of the extruded pipe was measured to be 50%. A pipe having an inner diameter of 0.5 mm, an outer diameter of 0.9 mm, and a wall thickness of 0.2 mm was obtained.

### Example 1-2

### Masterbatch Processing

Manufacture was performed in the same manner as in Example 1-1, except that the ethylene-methyl acrylate copolymer (EMA, DuPont ELVALOY^{TM} AC 1218) was replaced with an ethylene-ethyl acrylate copolymer (EEA, ELVALOY^{TM} AC 2116).

### Extrusion into Pipe

Molding was performed in the same manner as in Example 1-1, except that the draw ratio was controlled to be 9.8.

### Example 1-3

Masterbatch Processing

Manufacture was performed in the same manner as in Example 1-1, except that the ethylene-methyl acrylate copolymer (EMA, DuPont ELVALOY^{TM} AC 1218) was replaced with an ethylene-butyl acrylate copolymer (EBA, AC 3717).

### Extrusion into Pipe

Molding was performed in the same manner as in Example 1-1.

### Example 1-4

### Masterbatch Processing

Manufacture was performed in the same manner as in Example 1-1, except that the ethylene-methyl acrylate copolymer (EMA, DuPont ELVALOY^{TM} AC 1218) was replaced with an ethylene-methyl methacrylate copolymer (EMMA, Sumitomo CM8014).

### Extrusion into Pipe

Molding was performed in the same manner as in Example 1-1, except that the draw ratio was controlled to be 9.9.

### Example 1-5

### Masterbatch Processing

Manufacture was performed in the same manner as in Example 1-1.

### Extrusion into Pipe

Molding was performed in the same manner as in Example 1-1, except that the draw ratio was controlled to be 5, and the orientation degree of the molecular chains of the extruded pipe was measured to be 23%.

### Example 1-6

### Masterbatch Processing

Manufacture was performed in the same manner as in Example 1-1.

### Extrusion into Pipe

Molding was performed in the same manner as in Example 1-1, except that the draw ratio was controlled to be 7.4, and the orientation degree of the molecular chains of the extruded pipe was measured to be 30%.

### Example 1-7

### Masterbatch Processing

Manufacture was performed in the same manner as in Example 1-1.

### Extrusion into Pipe

Molding was performed in the same manner as in Example 1-1, except that the draw ratio was controlled to be 15.3, and the orientation degree of the molecular chains of the extruded pipe was measured to be 90%.

### Example 1-8

### Masterbatch Processing

Manufacture was performed in the same manner as in Example 1-1.

### Extrusion into Pipe

Molding was performed in the same manner as in Example 1-1, except that the draw ratio was controlled to be 17.5, and the orientation degree of the molecular chains of the extruded pipe was measured to be 95%.

### Example 1-9

### Masterbatch Processing

Manufacture was performed in the same manner as in Example 1-1.

### Extrusion into Pipe

Molding was performed in the same manner as in Example 1-1, except that the draw ratio was controlled to be 8.0, and the orientation degree of the molecular chains of the extruded pipe was measured to be 35%.

### Example 1-10

### Masterbatch Processing

Manufacture was performed in the same manner as in Example 1-1.

### Extrusion into Pipe

The above-obtained masterbatch granules were subjected to tube molding by means of a single-screw extruder. A full-flight screw was used, at an extrusion temperature of 130-190 °C (the extrusion temperatures were respectively as follows: zone 1: 130 °C, zone 2: 180 °C, zone 3: 190 °C, flange zone: 190 °C, head zone: 190 °C, and die zone: 190 °C), the draw ratio was controlled to be 29.9, extrusion molding was performed, and a pipe having an inner diameter of 0.4 mm, an outer diameter of 1.06 mm, and a wall thickness of 0.33 mm was obtained. The orientation degree of the molecular chains of the extruded pipe was measured to be 80%.

### Example 1-11

### Masterbatch Processing

Manufacture was performed in the same manner as in Example 1-1.

### Extrusion into Pipe

The above-obtained masterbatch granules were subjected to tube molding by means of a single-screw extruder. A full-flight screw was used, at an extrusion temperature of 130-190 °C (the extrusion temperatures were respectively as follows: zone 1: 130 °C, zone 2: 180 °C, zone 3: 190 °C, flange zone: 190 °C, head zone: 190 °C, and die zone: 190 °C), the draw ratio was controlled to be 55.6, extrusion molding was performed, and a pipe having an inner diameter of 3.0 mm, an outer diameter of 4.04 mm, and a wall thickness of 0.52 mm was obtained. The orientation degree of the molecular chains of the extruded pipe was measured to be 80%.

### Comparative Example 1-1

### Masterbatch Processing

Low-density polyethylene (LDPE, lyondellbasell Lupolen 2426K) and antioxidant (antioxidant 1010) (mass ratio=60/0.1) were added to a high-speed mixer and stirred for 3-5 minutes. The material obtained from the above process was fed into a twin-screw extruder having a cylinder diameter of 30 mm, and extruded at a screw speed of 45 rpm and an extrusion temperature of 130-200 °C (the temperature range included 10 zones: zone 1 was 130 °C, zone 2 was 160 °C, zone 3 was 180 °C, zone 4 was 185 °C, zone 5 was 190 °C, zone 6 was 190 °C, zone 7 was 195 °C, zone 8 was 195 °C, zone 9 was 195 °C, zone 10 was 195 °C, and the head temperature was set to 200 °C), drawn, water-cooled, and pelletized to finally form masterbatch granules.

### Extrusion into Pipe

The above-obtained masterbatch granules were subjected to tube molding by means of a single-screw extruder. A full-flight screw was used, at an extrusion temperature of 130-190 °C (the extrusion temperatures were respectively as follows: zone 1: 130 °C, zone 2: 180 °C, zone 3: 190 °C, flange zone: 190 °C, head zone: 190 °C, and die zone: 190 °C), the draw ratio was controlled to be 10.5, extrusion molding was performed, and the orientation degree of the molecular chains of the extruded pipe was measured to be 50%. A pipe having an inner diameter of 0.5 mm, an outer diameter of 0.9 mm, and a wall thickness of 0.2 mm was obtained.

### Comparative Example 1-2

### Masterbatch Processing

Manufacture was performed in the same manner as in Comparative Example 1-1, except that the low-density polyethylene (LDPE, lyondellbasell Lupolen 2426K) was replaced with an ethylene-vinyl acetate copolymer (EVA, 7350M).

### Extrusion into Pipe

Molding was performed in the same manner as in Comparative Example 1-1, except that the draw ratio was 10.2.

### Comparative Example 1-3

### Masterbatch Processing

Manufacture was performed in the same manner as in Comparative Example 1, except that the low-density polyethylene (LDPE, lyondellbasell Lupolen 2426K) was replaced with a polyolefin elastomer (POE, ENGAGE^{™} 8180).

### Extrusion into Pipe

Molding was performed in the same manner as in Comparative Example 1-1, except that the draw ratio was 10.9.

### Comparative Example 1-4

### Masterbatch Processing

Manufacture was performed in the same manner as in Example 1-1.

### Extrusion into Pipe

Molding was performed in the same manner as in Example 1-1, except that the draw ratio was 4, and the orientation degree of the molecular chains of the extruded pipe was measured to be 15%.

### Comparative Example 1-5

A commercially available PTFE tearable sheath was used, having a specification of AWG 24F.

For the above-prepared easy-to-peel pipe, the orientation degree of the molecular chains of the extruded pipe during extrusion was determined according to the above orientation degree determination method; the tear linearity was measured according to the above test method for tear linearity; and the tear strength was measured according to the above tear strength test method. The results of Examples 1-1 to 1-11 are shown in Table 1-1, and the results of Comparative Examples 1-1 to 1-5 are shown in Table 1-2.

**Table 1-1 Examples 1-1 to 1-11**

| | Substrate | | | | Draw Ratio | Orientation Degree (%) | Tear Linearity | Tear Strength |
|---|---|---|---|---|---|---|---|---|
| | EMA | EEA | EBA | EMMA | | | | |
| | (g) | (g) | (g) | (g) | | | | (kN/m) |
| Example 1-1 | 600 | / | / | / | 9.7 | 50 | 49:51 | 8.2 |
| Example 1-2 | / | 600 | / | / | 9.8 | 50 | 49:51 | 8.7 |
| Example 1-3 | / | / | 600 | / | 9.7 | 50 | 49:51 | 9.0 |
| Example 1-4 | / | / | / | 600 | 9.9 | 50 | 49:51 | 9.5 |
| Example 1-5 | 600 | / | / | / | 5 | 23 | 48:52 | 9.0 |
| Example 1-6 | 600 | / | / | / | 7.4 | 30 | 48:52 | 8.7 |
| Example 1-7 | 600 | / | / | / | 15.3 | 90 | 50:50 | 8.1 |
| Example 1-8 | 600 | / | / | / | 17.5 | 95 | 50:50 | 8.1 |
| Example 1-9 | 600 | / | / | / | 8.0 | 35 | 48:52 | 8.5 |
| Example 1-10 | 600 | / | / | / | 29.9 | 80 | 49:51 | 8.3 |
| Example 1-11 | 600 | / | / | / | 55.6 | 80 | 49:51 | 8.2 |

**Table 1-2 Comparative Examples 1-1 to 1-5**

| | Substrate | | | | | Draw Ratio | Orientation Degree (%) | Tearable or not | Tear Linearity | Tear Strength (kN/m) |
|---|---|---|---|---|---|---|---|---|---|---|
| | EMA | LDPE | EVA | POE | Fluorine Material (Tearable PTFE) | | | | | |
| Comparative Example 1-1 | / | 600 | / | / | / | 10.5 | 50 | N | / | / |
| Comparative Example 1-2 | / | / | 600 | / | / | 10.2 | 50 | N | / | / |
| Comparative Example 1-3 | / | / | / | 600 | / | 10.9 | 50 | N | / | / |
| Comparative Example 1-4 | 600 | / | / | / | / | 4 | 15 | N | / | / |
| Comparative Example 1-5 | / | / | / | / | √ | / | 55 | Y | 50:50 | 12.5 |

It can be seen from Examples 1-1 to 1-4 and Comparative Examples 1-1 to 1-3 that the easy-to-peel pipe made from polyolefin and copolymer resin thereof is greatly related to the type of polymer, and EMA, EEA, EBA, and EMMA can all be used for the preparation of easy-to-peel pipes, thereby indicating that this class of ethylene-acrylic acid copolymers can all be used for the preparation of easy-to-peel pipes. It can be seen from Examples 1-1, 1-5 to 1-11, and Comparative Example 1-4 that, in addition to the type of polymer, the orientation degree of the molecular chains of the extruded pipe in the extrusion process further needs to be controlled to be 23%-95%, that is, the finally obtained easy-to-peel pipe has a molecular chain orientation degree of 23%-95%, and has linear tearability. It can be seen from Examples 1-1 to 1-11 and Comparative Example 1-5 that the easy-to-peel pipe of the present invention has a tear strength lower than that of a PTFE easy-to-peel pipe, and can replace a PTFE tearable pipe.

### Example 2-1

### Masterbatch Processing

An ethylene-methyl acrylate copolymer (EMA, DuPont ELVALOY^{TM} AC 1218), low-density polyethylene (LDPE, lyondellbasell Lupolen 2426K) and antioxidant (antioxidant 1010) (mass ratio=60/10/0.1) were added to a high-speed mixer and stirred for 3-5 minutes. The material obtained from the above process was fed into a twin-screw extruder having a diameter of 30 mm, and extruded at a screw speed of 45 rpm and a temperature of 130-200 °C (the temperature range included 10 zones: zone 1 was 130 °C, zone 2 was 160 °C, zone 3 was 180 °C, zone 4 was 185 °C, zone 5 was 190 °C, zone 6 was 190 °C, zone 7 was 195 °C, zone 8 was 195 °C, zone 9 was 195 °C, zone 10 was 195 °C, and the head temperature was set to 200 °C), drawn, water-cooled, and pelletized to finally form masterbatch granules.

### Extrusion into Pipe

The above-obtained masterbatch granules were subjected to tube molding by means of a single-screw extruder. A full-flight screw was used, at an extrusion temperature of 130-190 °C (the extrusion temperatures were respectively as follows: zone 1: 130 °C, zone 2: 180 °C, zone 3: 190 °C, flange zone: 190 °C, head zone: 190 °C, and die zone: 190 °C), the draw ratio was controlled to be 9.9, extrusion molding was performed, and the orientation degree of the molecular chains of the extruded pipe was measured to be 50%. A pipe having an inner diameter of 0.5 mm, an outer diameter of 0.9 mm, and a wall thickness of 0.2 mm was obtained.

### Example 2-2

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-ethyl acrylate copolymer (EEA, ELVALOY^{TM} AC 2116) / low-density polyethylene (LDPE, lyondellbasell Lupolen 2426K) / antioxidant (antioxidant 1010) (mass ratio=60/10/0.1).

### Extrusion into Pipe

Molding was performed in the same manner as in Example 2-1, except that the draw ratio was controlled to be 10.1.

### Example 2-3

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-butyl acrylate copolymer (EBA, AC 3717) / low-density polyethylene (LDPE, lyondellbasell Lupolen 2426K) / antioxidant (antioxidant 1010) (mass ratio=60/10/0.1).

### Extrusion into Pipe

Molding was performed in the same manner as in Example 2-1.

### Example 2-4

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl methacrylate copolymer (EMMA, Sumitomo CM8014) / low-density polyethylene (LDPE, lyondellbasell Lupolen 2426K) / antioxidant (antioxidant 1010) (mass ratio=60/10/0.1).

### Extrusion into Pipe

Molding was performed in the same manner as in Example 2-1, except that the draw ratio was controlled to be 10.3.

### Example 2-5

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{TM} AC 1218) / linear low-density polyethylene (LLDPE, SABIC^{®} LLDPE 218W) / antioxidant (antioxidant 1010) (mass ratio=60/10/0.1).

### Extrusion into Pipe

Molding was performed in the same manner as in Example 2-1, except that the draw ratio was controlled to be 9.6.

### Example 2-6

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{™} AC 1218) / medium-density polyethylene (MDPE, DOW AXELERON^{™} 8864 NT) / antioxidant (antioxidant 1010) (mass ratio=60/10/0.1).

### Extrusion into Pipe

Molding was performed in the same manner as in Example 2-1, except that the draw ratio was controlled to be 9.6.

### Example 2-7

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{TM} AC 1218) / high-density polyethylene (HDPE, lyondellbasell ACP 6541A) / antioxidant (antioxidant 1010) (mass ratio=60/10/0.1).

### Extrusion into Pipe

Molding was performed in the same manner as in Example 2-1, except that the draw ratio was controlled to be 9.5.

### Example 2-8

### Masterbatch Processing

Manufacture was performed in the same manner as in Example 2-1, except that the ethylene-methyl acrylate copolymer (EMA, DuPont ELVALOY^{™} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{™} AC 1218) / polyolefin elastomer (POE, ENGAGE^{™} 8480) / antioxidant (antioxidant 1010) (mass ratio=60/10/0.1).

### Extrusion into Pipe

Molding was performed in the same manner as in Example 2-1, except that the draw ratio was controlled to be 10.6.

### Example 2-9

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{TM} AC 1218) / ethylene-vinyl acetate copolymer (EVA, 7350M) / antioxidant (antioxidant 1010) (mass ratio=60/10/0.1).

### Extrusion into Pipe

Molding was performed in the same manner as in Example 2-1, except that the draw ratio was controlled to be 9.6.

### Example 2-10

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=20/10/0.1).

### Extrusion into Pipe

Molding was performed in the same manner as in Example 2-1, except that the draw ratio was controlled to be 10.5.

### Example 2-11

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=75/10/0.1).

### Extrusion into Pipe

Molding was performed in the same manner as in Example 2-1, except that the draw ratio was controlled to be 9.8.

### Example 2-12

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{™} AC 1218) / low-density polyethylene (LDPE, lyondellbasell Lupolen 2426K) / antioxidant (antioxidant 1010) (mass ratio=90/10/0.1).

### Extrusion into Pipe

Molding was performed in the same manner as in Example 2-1, except that the draw ratio was controlled to be 9.7.

### Example 2-13

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/40/0.1).

### Extrusion into Pipe

Molding was performed in the same manner as in Example 2-1, except that the draw ratio was controlled to be 10.6.

### Example 2-14

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{™} AC 1218) / low-density polyethylene (LDPE, lyondellbasell Lupolen 2426K) / antioxidant (antioxidant 1010) (mass ratio=60/60/0.1).

### Extrusion into Pipe

Molding was performed in the same manner as in Example 2-1, except that the draw ratio was controlled to be 10.7.

### Example 2-15

### Masterbatch Processing

Manufacture was performed in the same manner as in Example 2-1, except that the ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/10/0.1) was replaced with an ethylene-methyl acrylate copolymer (EMA, DuPont ELVALOY^{TM} AC 1218) / low-density polyethylene (LDPE, lyondellbasell Lupolen 2426K) / antioxidant (antioxidant 1010) (mass ratio=60/80/0.1).

### Extrusion into Pipe

Molding was performed in the same manner as in Example 2-1, except that the draw ratio was controlled to be 10.8.

### Example 2-16

### Masterbatch Processing

Manufacture was performed in the same manner as in Example 2-1.

### Extrusion into Pipe

Molding was performed in the same manner as in Example 2-1, except that the draw ratio was controlled to be 5.8, and the orientation degree of the molecular chains of the extruded pipe was measured to be 23%.

### Example 2-17

### Masterbatch Processing

Manufacture was performed in the same manner as in Example 2-1.

### Extrusion into Pipe

Molding was performed in the same manner as in Example 2-1, except that the draw ratio was controlled to be 7.3, and the orientation degree of the molecular chains of the extruded pipe was measured to be 30%.

### Example 2-18

### Masterbatch Processing

Manufacture was performed in the same manner as in Example 2-1.

### Extrusion into Pipe

Molding was performed in the same manner as in Example 2-1, except that the draw ratio was controlled to be 15.8, and the orientation degree of the molecular chains of the extruded pipe was measured to be 90%.

### Example 2-19

### Masterbatch Processing

Manufacture was performed in the same manner as in Example 2-1.

### Extrusion into Pipe

Molding was performed in the same manner as in Example 2-1, except that the draw ratio was controlled to be 17.9, and the orientation degree of the molecular chains of the extruded pipe was measured to be 95%.

### Example 2-20

### Masterbatch Processing

Manufacture was performed in the same manner as in Example 2-1.

### Extrusion into Pipe

Molding was performed in the same manner as in Example 2-1, except that the draw ratio was controlled to be 8.1, and the orientation degree of the molecular chains of the extruded pipe was measured to be 35%.

### Comparative Example 2-1

### Masterbatch Processing

Low-density polyethylene (LDPE, lyondellbasell Lupolen 2426K) and antioxidant (antioxidant 1010) (mass ratio=60/0.1) was added to a high-speed mixer and stirred for 3-5 minutes. The material obtained from the above process was fed into a twin-screw extruder having a cylinder diameter of 30 mm, and extruded at a screw speed of 45 rpm and an extrusion temperature of 130-200 °C (the temperature range included 10 zones: zone 1 was 130 °C, zone 2 was 160 °C, zone 3 was 180 °C, zone 4 was 185 °C, zone 5 was 190 °C, zone 6 was 190 °C, zone 7 was 195 °C, zone 8 was 195 °C, zone 9 was 195 °C, zone 10 was 195 °C, and the head temperature was set to 200 °C), drawn, water-cooled, and pelletized to finally form masterbatch granules.

### Extrusion into Pipe

The above-obtained masterbatch granules were subjected to tube molding by means of a single-screw extruder. A full-flight screw was used, at an extrusion temperature of 130-190 °C (the extrusion temperatures were respectively as follows: zone 1: 130 °C, zone 2: 180 °C, zone 3: 190 °C, flange zone: 190 °C, head zone: 190 °C, and die zone: 190 °C), the draw ratio was controlled to be 10.5, extrusion molding was performed, and the orientation degree of the molecular chains of the extruded pipe was measured to be 50%. A pipe having an inner diameter of 0.5 mm, an outer diameter of 0.9 mm, and a wall thickness of 0.2 mm was obtained.

### Comparative Example 2-2

### Masterbatch Processing

Manufacture was performed in the same manner as in Comparative Example 2-1, except that the low-density polyethylene (LDPE, lyondellbasell Lupolen 2426K) / antioxidant (antioxidant 1010) (mass ratio=60/0.1) was replaced with a polyolefin elastomer (POE, ENGAGE^{™} 8480) / antioxidant (antioxidant 1010) (mass ratio=60/0.1).

### Extrusion into Pipe

Molding was performed in the same manner as in Comparative Example 2-1, except that the draw ratio was controlled to be 10.9.

### Comparative Example 2-3

### Masterbatch Processing

Manufacture was performed in the same manner as in Comparative Example 2-1, except that the low-density polyethylene (LDPE, lyondellbasell Lupolen 2426K) / antioxidant (antioxidant 1010) (mass ratio=60/0.1) was replaced with an ethylene-vinyl acetate copolymer (EVA, 7350M) / antioxidant (antioxidant 1010) (mass ratio=60/0.1).

### Extrusion into Pipe

Molding was performed in the same manner as in Comparative Example 2-1, except that the draw ratio was controlled to be 10.2.

### Comparative Example 2-4

### Masterbatch Processing

Manufacture was performed in the same manner as in Example 2-1.

### Extrusion into Pipe

Molding was performed in the same manner as in Example 2-1, except that the draw ratio was controlled to be 4, and the orientation degree of the molecular chains of the extruded pipe was measured to be 15%.

### Comparative Example 2-5

A commercially available PTFE tearable sheath was used, having a specification of AWG 24F.

For the above-prepared easy-to-peel pipe, the preparation condition parameters of Examples 2-1 to 2-20 are shown in Table 2-1, and the preparation condition parameters of Comparative Examples 2-1 to 2-5 are shown in Table 2-2. The orientation degree of the molecular chains of the extruded pipe during extrusion and the orientation degree of the commercially available PTFE tearable sheath of Comparative Example 2-5 were determined according to the above orientation degree determination method; the tear linearity was measured according to the above test method for tear linearity; the tear strength was measured according to the above tear strength test method; and the tensile strength was measured according to the above tensile strength test method. The measurement results of Examples 2-1 to 2-20 and Comparative Examples 2-1 to 2-5 are shown in Table 2-3.

**Table 2-1 Preparation Condition Parameters of Examples 2-1 to 2-20**

| | Ethylene-acrylate copolymer | | | | Polyethylene (PE) | | | | POE | EVA | Draw Ratio |
|---|---|---|---|---|---|---|---|---|---|---|---|
| | EMA | EEA | EBA | EMMA | LDPE | LLDPE | MDPE | HDPE | (g) | (g) | |
| | (g) | (g) | (g) | (g) | (g) | (g) | (g) | (g) | | | |
| Example 1-1 | 600 | / | / | / | / | / | / | / | / | / | 9.7 |
| Example 2-1 | 600 | / | / | / | 100 | / | / | / | / | / | 9.9 |
| Example 2-2 | / | 600 | / | / | 100 | / | / | / | / | / | 10.1 |
| Example 2-3 | / | / | 600 | / | 100 | / | / | / | / | / | 9.9 |
| Example 2-4 | / | / | / | 600 | 100 | / | / | / | / | / | 10.3 |
| Example 2-5 | 600 | / | / | / | / | 100 | / | / | / | / | 9.6 |
| Example 2-6 | 600 | / | / | / | / | / | 100 | / | / | / | 9.6 |
| Example 2-7 | 600 | / | / | / | / | / | / | 100 | / | / | 9.5 |
| Example 2-8 | 600 | / | / | / | / | / | / | / | 100 | / | 10.6 |
| Example 2-9 | 600 | / | / | / | / | / | / | / | / | 100 | 9.6 |
| Example 2-10 | 200 | / | / | / | 100 | / | / | / | / | / | 10.5 |
| Example 2-11 | 750 | / | / | / | 100 | / | / | / | / | / | 9.8 |
| Example 2-12 | 900 | / | / | / | 100 | / | / | / | / | / | 9.7 |
| Example 2-13 | 600 | / | / | / | 400 | / | / | / | / | / | 10.6 |
| Example 2-14 | 600 | / | / | / | 600 | / | / | / | / | / | 10.7 |
| Example 2-15 | 600 | / | / | / | 800 | / | / | / | / | / | 10.8 |
| Example 2-16 | 600 | / | / | / | 100 | / | / | / | / | / | 5.8 |
| Example 2-17 | 600 | / | / | / | 100 | / | / | / | / | / | 7.3 |
| Example 2-18 | 600 | / | / | / | 100 | / | / | / | / | / | 15.8 |
| Example 2-19 | 600 | / | / | / | 100 | / | / | / | / | / | 17.9 |
| Example 2-20 | 600 | / | / | / | 100 | / | / | / | / | / | 8.1 |

**Table 2-2 Preparation Condition Parameters of Comparative Examples 2-1 to 2-5**

| | Substrate | | | | | Draw Ratio |
|---|---|---|---|---|---|---|
| | EMA (g) | LDPE (g) | POE (g) | EVA (g) | Fluorine Material (Tearable PTFE) | |
| Comparative Example 2-1 | / | 600 | / | / | / | 10.5 |
| Comparative Example 2-2 | / | / | 600 | / | / | 10.9 |
| Comparative Example 2-3 | / | / | / | 600 | / | 10.2 |
| Comparative Example 2-4 | 600 | 100 | / | / | / | 4 |
| Comparative Example 2-5 | / | / | / | / | √ | / |

**Table 2-3 Measurement Results of Examples 2-1 to 2-20 and Comparative Examples 2-1 to 2-5**

| | Orientation Degree (%) | Tearable or not | Tear Linearity | Tear Strength (N) | Tensile Strength (MPa) |
|---|---|---|---|---|---|
| Example 1-1 | 50 | Y | 49:51 | 8.2 | 16 |
| Example 2-1 | 50 | Y | 50:50 | 8.3 | 17.5 |
| Example 2-2 | 50 | Y | 50:50 | 8.5 | 17.8 |
| Example 2-3 | 50 | Y | 50:50 | 9.0 | 18.5 |
| Example 2-4 | 50 | Y | 50:50 | 8.3 | 17.5 |
| Example 2-5 | 50 | Y | 50:50 | 9.0 | 19.5 |
| Example 2-6 | 50 | Y | 50:50 | 10.5 | 21.5 |
| Example 2-7 | 50 | Y | 50:50 | 11 | 23.5 |
| Example 2-8 | 50 | Y | 50:50 | 10 | 20.5 |
| Example 2-9 | 50 | Y | 50:50 | 9.0 | 19.5 |
| Example 2-10 | 50 | Y | 50:50 | 9.2 | 19.0 |
| Example 2-11 | 50 | Y | 50:50 | 8.0 | 17.0 |
| Example 2-12 | 50 | Y | 50:50 | 8.0 | 16.5 |
| Example 2-13 | 50 | Y | 50:50 | 9.2 | 19.5 |
| Example 2-14 | 50 | Y | 50:50 | 9.3 | 20.0 |
| Example 2-15 | 50 | Y | 50:50 | 9.5 | 20.0 |
| Example 2-16 | 23 | Y | 48:52 | 9.0 | 17.0 |
| Example 2-17 | 30 | Y | 49:51 | 9.0 | 17.0 |
| Example 2-18 | 90 | Y | 50:50 | 8.0 | 17.5 |
| Example 2-19 | 95 | Y | 50:50 | 8.0 | 17.5 |
| Example 2-20 | 35 | Y | 49:51 | 8.7 | 17.1 |
| Comparative Example 2-1 | 50 | N | / | / | 21 |
| Comparative Example 2-2 | 50 | N | / | / | 24 |
| Comparative Example 2-3 | 50 | N | / | / | 19 |
| Comparative Example 2-4 | 15 | N | / | / | 17.5 |
| Comparative Example 2-5 | 55 | Y | 50:50 | 12 | 45 |

It can be seen from Examples 2-1 to 2-4 and Comparative Examples 2-1 to 2-3 that the easy-to-peel pipe made from polyolefin and copolymer resin thereof is greatly related to the type of polymer, and EMA, EEA, EBA, and EMMA can all be used for the preparation of easy-to-peel pipes, thereby indicating that this class of ethylene-acrylic acid copolymers can all be used for the preparation of easy-to-peel pipes. It can be seen from Example 2-1, 2-16 to 2-20, and Comparative Example 2-4 that, in addition to the type of polymer, the orientation degree of the molecular chains of the extruded pipe in the extrusion process further needs to be controlled to be 23%-95%, that is, the finally obtained easy-to-peel pipe has a molecular chain orientation degree of 23%-95%, and has linear tearability. It can be seen from Example 2-1 and Example 1-1 that the addition of the reinforcing agent can increase the tensile strength of the easy-to-peel pipe. The present invention provides an easy-to-peel pipe made from polyolefin and copolymer resin thereof and a reinforcing agent, which has a tear strength lower than that of a PTFE easy-to-peel pipe, a relatively high tensile strength, and does not adhere to internal materials, and can completely replace a PTFE easy-to-peel pipe, providing a new option for easy-to-peel pipes.

The above are merely preferred embodiments of the present invention, and are not intended to limit the patent scope of the present invention. For those skilled in the art, the present invention can have various modifications and variations. Any modifications, equivalent substitutions, improvements, etc. made within the spirit and principles of the present invention shall be included in the patent protection scope of the present invention.

## Claims

1. An easy-to-peel pipe, having linear tearability in a length direction of the pipe, **characterized in that** a preparation material of the easy-to-peel pipe comprises an ethylene-acrylate copolymer as a matrix resin, and an extrusion process controls an orientation degree of molecular chains of an extruded pipe to be 23%-95%.

2. The easy-to-peel pipe according to claim 1, wherein the orientation degree of the molecular chains of the extruded pipe is 30%-90%.

3. The easy-to-peel pipe according to any one of claims 1 to 2, wherein the ethylene-acrylate copolymer comprises at least one of an ethylene-methyl acrylate copolymer, an ethylene-ethyl acrylate copolymer, an ethylene-butyl acrylate copolymer, and an ethylene-methyl methacrylate copolymer.

4. The easy-to-peel pipe according to any one of claims 1 to 3, wherein the ethylene-acrylate copolymer has a melt index of (0.5-10) g/10min, and an acrylic acid content of 9wt%-30wt%; and/or
the ethylene-acrylate copolymer has a tear strength of less than 75 kN/m; and/or
the ethylene-acrylate copolymer has a tensile strength of 15-24 MPa.

5. The easy-to-peel pipe according to any one of claims 1 to 4, wherein calculated by weight parts, the preparation material of the easy-to-peel pipe comprises following components:
the ethylene-acrylate copolymer: 20-90 parts; and
reinforcing agent: 10-80 parts.

6. The easy-to-peel pipe according to claim 5, wherein the reinforcing agent comprises at least one of polyethylene, polyolefin elastomer, and ethylene-vinyl acetate copolymer.

7. The easy-to-peel pipe according to claim 6, wherein the polyethylene is low-density polyethylene, and the low-density polyethylene satisfies: a melt index of (0.3-7) g/10min, and a tensile strength of 17-30 MPa; and/or
the polyethylene is linear low-density polyethylene, and the linear low-density polyethylene satisfies: a melt index of (0.3-10) g/10min, and a tensile strength of 20-35 MPa; and/or
the polyethylene is medium-density polyethylene, and the medium-density polyethylene satisfies: a melt index of (0.3-10) g/10min, and a tensile strength of 25-35 MPa; and/or
the polyethylene is high-density polyethylene, and the high-density polyethylene satisfies: a melt index of (0.3-10) g/10min, and a tensile strength of 28-40 MPa; and/or
the polyolefin elastomer satisfies: a melt index of (0.5-5) g/10min, a tensile strength of 18-40 MPa, and a melting temperature of 70-110 °C; and/or
the ethylene-vinyl acetate copolymer satisfies: a melt index of (0.5-7) g/10min, a tensile strength of 16-25 MPa, and a vinyl acetate content of not more than 20%.

8. The easy-to-peel pipe according to any one of claims 1 to 7, wherein calculated by weight parts, the preparation material of the easy-to-peel pipe further comprises at least one of following additives:
antioxidant: 0.05-0.3 parts; and
lubricant: 0.05-0.1 parts,
wherein the antioxidant comprises at least one of an asymmetric hindered phenolic antioxidant, an aromatic amine antioxidant, a thioether antioxidant, and a phosphite antioxidant; and
the lubricant comprises at least one of PTFE powder, zinc stearate, magnesium stearate, silicone, calcium stearate, and ethylene bis-stearamide.

9. The easy-to-peel pipe according to any one of claims 1 to 8, wherein a ratio representing the linear tearability is in a range of 50%:50% to 48%:52%; and/or
the easy-to-peel pipe has an inner diameter of 0.3-16 mm; and/or
the easy-to-peel pipe has a wall thickness of 0.1-2 mm.

10. An easy-to-peel pipe, having linear tearability in a length direction of the pipe, **characterized in that** a preparation material of the easy-to-peel pipe comprises an ethylene-acrylate copolymer as a matrix resin, and an orientation degree of molecular chains of the easy-to-peel pipe is 23%-95%.

11. The easy-to-peel pipe according to claim 10, wherein the orientation degree of the molecular chains of the easy-to-peel pipe is 30%-95%.

12. The easy-to-peel pipe according to claim 10, wherein the orientation degree of the molecular chains of the easy-to-peel pipe is 30%-90%.

13. The easy-to-peel pipe according to claim 10, wherein the orientation degree of the molecular chains of the easy-to-peel pipe is 35%-90%.

14. A preparation method of the easy-to-peel pipe according to any one of claims 1 to 13, **characterized in that** the preparation method comprises following steps:
masterbatch processing: mixing raw materials uniformly, extruding by an extrusion device, drawing, and pelletizing a resultant to obtain masterbatch granules, wherein the raw materials comprise an ethylene-acrylate copolymer; and
extrusion into pipe: extruding the above-obtained masterbatch granules into a pipe by an extruder to obtain the easy-to-peel pipe, wherein an orientation degree of molecular chains of the extruded pipe is controlled to be 23%-95%.

15. The preparation method according to claim 14, wherein in the masterbatch processing step, the raw materials further comprise at least one of a reinforcing agent, an antioxidant, and a lubricant; and/or
in the masterbatch processing step, a mixing duration is 3-5 min; and/or
in the masterbatch processing step, an extrusion temperature of the extrusion device is 130-200 °C; and/or
in the extrusion into pipe step, the orientation degree of the molecular chains of the extruded pipe is 30%-90%.

16. The preparation method according to claim 14, wherein in the extrusion into pipe step, an extrusion temperature of the extruder is 130-190 °C; and/or
in the extrusion into pipe step, a draw ratio of the extruded pipe is 5-60; and/or
in the extrusion into pipe step, a draw ratio of the extruded pipe is 7-30.
